# EUROPEAN PATENT APPLICATION

(11) **EP 1 775 909 A2**
(43) Date of publication of application: **18.04.2007**
(21) Application number: 06255345.8
(22) Date of filing: 17.10.2006
(51) Int. Cl.: H04L 29/06

(54) **Methods and apparatuses for providing location data of a first terminal and for establishing an IMS session if the charge is acceptable**

(30) Priority: 17.10.2005 GB 0521086
(71) Applicant: Vodafone Group PLC, Newbury Berkshire RG14 2FN (GB)
(72) Inventor: Dawes, Peter, Swindon Wiltshire SN1 5JU (GB)
(74) Representative: Foster, Mark Charles

(57) **Abstract**

A method of using Session Initiation Protocol to provide data indicative of a location of a first terminal (19) or a first network (18) with which the first terminal (19) is registered to an entity (7), including the steps of: the first terminal (19) sending a message to the first network (18); the first network determining that data indicative of the location of the first terminal (19) is to be provided to the entity; and sending said data to the entity (7). The data may include an identifier of the first network (18), or the entity may be a second terminal (7) registered with a second network (9). The method or system may be used to establish an Internet Protocol Multimedia Subsystem Session in which the first terminal (19) and the second terminal (7) having respectively a first user (27) and a second user (28); including the further steps of: the second terminal (7) receiving said data; determining information indicative of charge payable by the second user (28) for the session; determining whether the charge is acceptable to the second user (28); and continuing or discontinuing to establish the session in dependence upon the determination.

## Description

The invention relates to a method of establishing an Internet protocol multimedia subsystem (IMS) session between two terminals. The invention also relates to a telecommunications system for establishing an IMS session between two terminals.

The IMS is a set of core network servers that sits behind the gateway GPRS support node (GGSN) in the packet switched domain. The servers process signalling between terminals. The aim of IMS is to allow users such as mobile telephone network service providers to provide services to their subscribers as efficiently and effectively as possible and independently of the manner by which its network is accessed. The IMS architecture is likely to support, for example, the following communication types: voice, video, instant messaging, "presence" (a user's availability for contact), location based services, e-mail and web. Further communication types are likely to be added in the future.

The 3GPP has chosen session initiation protocol (SIP) for managing these sessions. The SIP protocol is a session-based protocol designed to establish IP-based communication sessions between two or more terminals. SIP is used as a means of signalling, end-to-end, the initiation, modification and termination of packet switched sessions. Once a SIP session has been established, communication between the terminals can be carried out using a variety of different protocols (for example, those designed for streaming audio and video). These protocols are defined in SIP session initiation messages.

With IMS, users are no longer restricted to a separate voice call or data session. Sessions can be established between terminals that allow a variety of communication types to be used and media to be exchanged. The sessions are dynamic in nature in that they can be adapted to meet the needs of the end users. For example, two such users might start a session with an exchange of instant messages and then decide that they wish to change to a voice call, possibly with video. This is all possible within the IMS framework. If a user wishes to send a file to another user and the users already have a session established between each other (for example, a voice session), the session can be re-defined to allow a data file exchange to take place. This session redefinition is transparent to the end user.

International calls made in PSTN or GSM or UMTS (3G) architectures are readily identifiable as such to a calling party because making such a call requires the use of an international dialling code. Also, network service providers are conventionally allocated dialling codes and which codes each network service provider has been allocated is publicly available, for example, on the Internet. Accordingly, it has been possible for a calling party to determine the likely charge rate applicable for a call before making the call.

The SIP protocol identifies a terminal by an address of the form "user@domain". If a user (the calling party) wishes to establish a session, which may be for any supported communication type, with another user (the called party), signalling will initially be directed to the called party using an address of this form. Such an address provides no indication of the geographical location of the called party. Even if, for example, the domain includes an identifier of a country, such as the domain ".co.uk", such a domain can be the address of a terminal neither located in that country nor registered with a network service provider of that country. As a result, the calling party does not know on initiating a session whether the called party's terminal is registered in the same country as the calling party's terminal, or in another country. The charge payable by the calling party to the network service provider with which the calling party is registered for the session is typically dependent upon the country in which the called party's terminal is registered. An international call conventionally attracts a higher charge rate.

The charge payable by the calling party is also typically dependent on the network service provider with which the called party is registered - if the calling party's terminal and the called party's terminal are registered with the same network service provider, that network service provider may charge at a reduced rate for sessions between those terminals.

There may be arrangements in place for which a network service provider charges at a reduced rate for calls between a calling party registered with that network service provider and a called party registered with another or an associated network service provider; for example, if the calling party's terminal and the called party's terminal are registered with network service providers having a special relationship such as belonging to the same company group but operating in different countries.

The calling party will often wish to know the applicable charge rate and, in particular, that charges payable to the network service provider will not exceed what should be expected. The called party's network service provider may also wish for the calling party to know the charge rate in order to instil trust of the network service provider in the calling party, and to encourage establishment and lengthy duration of sessions.

If the called party is roaming, that is, if the called party is located in a different geographical location to that in which the network with which the called party's terminal is registered, the calling party will expect to be charged for a session to the country in which the network with which the called party's terminal is registered (the "home network" of the called party) is located, but will not expect to be charged roaming charges for the called party. The called party will expect to receive a roaming charge relating to the connection of the session between the called party's home network and the network through which call is routed (the "visited network"). In an IMS architecture, the called party conventionally does not know what this charge will be before accepting establishment of a session.

According to the present invention, there is provided a method of using Session Initiation Protocol to provide data indicative of a location of a first terminal or a first network with which the first terminal is registered to an entity, including the steps of: the first terminal sending a message to the first network, the first network determining that data indicative of the location of the first terminal (19) is to be provided to the entity, and sending said data to the entity.

According to the present invention, there is further provided a system for using Session Initiation Protocol to provide data indicative of a location of a first terminal or a first network with which the first terminal is registered to an entity, including the steps of: the first terminal sending a message to the first network, the first network determining that data indicative of the location of the first terminal is to be provided to the entity; and sending said data to the entity.

Preferably, said entity is a second terminal registered with a second network. Also preferably, the data includes an identifier of the first network and/or an identifier of the location of the first network..

In an embodiment, for establishing an Internet Protocol Multimedia Subsystem Session, the first terminal and the second terminal having respectively a first user and a second user, further steps are includes of the second terminal receiving said data, determining information indicative of charge payable by the second user for the session, determining whether the charge is acceptable to the second user, and continuing or discontinuing to establish the session in dependence upon the determination.

According to the present invention, there is yet further provided a method of establishing an Internet Protocol Multimedia Subsystem Session between a first terminal and a second terminal having respectively a first user and a second user; the method including the first terminal receiving an indication of a charge payable by the first user for the session; determining whether the charge is acceptable to the first user; and continuing or discontinuing to establish the session in dependence upon the determination.

According to the present invention, there is furthermore provided a system for establishing an Internet Protocol Multimedia Subsystem Session between a first terminal and a second terminal having respectively a first user and a second user; the method including the first terminal receiving an indication of a charge payable by the first user for the session; determining whether the charge is acceptable to the first user; and continuing or discontinuing to establish the session in dependence upon the determination.

The terminal of the second user (the "calling party") can be configured to automatically accept any particular type or types of charge rates, such as: international charge rates; one-network charge rates (that is, rates for a session between terminals registered with the same network service provider), off-network charge rates (that is, rates for a session between terminals registered with different network service providers), by the inputting of user preferences or by prior arrangement with the calling party's home network service provider. Alternatively, the calling party's terminal can be configured to decline automatically sessions charged at any type or types of charge rate.

Rather than accept or decline a session automatically, the calling party's terminal can be configured to indicate to the calling party the applicable type of, or the actual pecuniary value of, the charge rate for a session before the session is established. Such an indication might appear on the display of the calling party's terminal. If the calling party indicates acceptance of the charge rate, for example, via a user interface of the terminal, establishment of the session will be continued. If the calling party declines to accept the charge rate, establishment of the session is ended.

If establishment of the session would incur a charge payable by the first user (the "called party"), the session may only be established if the called party is deemed to accept the charge rate. The called party's terminal can be configured by the called party by inputting preference information via a user interface of the terminal or by prior arrangement with the network service provider to which the called party subscribes to accept or decline the establishment of such sessions automatically. The terminal can alternatively be set to indicate to the called party the applicable charge rates and to proceed only on acceptance by the called party.

It will be apparent to users that on-network sessions are typically cheaper than other types of session, which will facilitate the promotion by a network service provider of on-network sessions. For example, if the calling party and the called party subscribe to the same network service provider, the invention allows the calling party to know that a reduced charge rate will be applied, thereby promoting on-network sessions.

Conventionally, a network service provider might require a user's public user identity to have a domain name identifying the provider so that a calling party knows when he or she is establishing an on-network session, and therefore can infer the type of charge applicable. An advantage of the invention is that the user may personalise the domain name because the calling party does not need the domain name to know the type of charge applicable. The calling party is notified of the applicable charge type.

Also, conventionally a user registering with a new network service provider in place of a former network service provider, and/or changing country of registration, is required to change public user identity so that a calling party can see from the new domain name that a session established with that user would be on-network. Conventionally, if a user does not change domain name, the calling party cannot know when off-network and/or international charges are to be applied and may thus incur unexpected charges. Another advantage of the invention is that no such change is necessary for the calling party know the charge applicable.

Advantageously, a calling party is informed that a session is on-network before the session is established by display on the calling party's terminal of a message to indicate the session is on-network - for example: "this call is on Vodafone and will be charged at a discount rate".

There is considered to be a reasonable chance that regulators will require network service providers to inform calling parties of the charge rates for an IMS session before the session is established. Implementation of the invention would comply with such a requirement.

If the called party is alerted that the calling party wishes to establish a session, but network resources are not available for the session, a "ghost ring" will occur, that is, the called party is alerted but the session is not established. To prevent "ghost rings", the calling party's terminal and the called party's terminal initially perform an offer/answer exchange carried in SIP, described in greater detail below. The exchange includes a preconditions mechanism. Preconditions are a set of constraints that must be satisfied for a session to begin. The offer/answer exchange is conducted without alerting the called party unless the called party is required to indicate consent to the changes, and without establishing a session. When the preconditions are met, network resources are reserved for the session and the called party is then alerted. RFC3312 and RFC4032 define the preconditions mechanism for ensuring network resources are reserved.

In particular, a "ghost ring" can sound on a called party's terminal because a calling party has discovered that he or she is making an international call and does not consent to the charge rate. Introducing a charging precondition that must be satisfied before the called party is alerted prevents the occurrence of "ghost rings".

The charging precondition allows the calling party's terminal to discover the country of registration of a party, and/or the relevant network service provider with whom a party subscribes. The terminal can then determine from that country and/or identity of the network service provider the charge rate that applies. The charging preconditions may however simply be used for discovery for, for example, including the discovered information in an address book of a terminal.

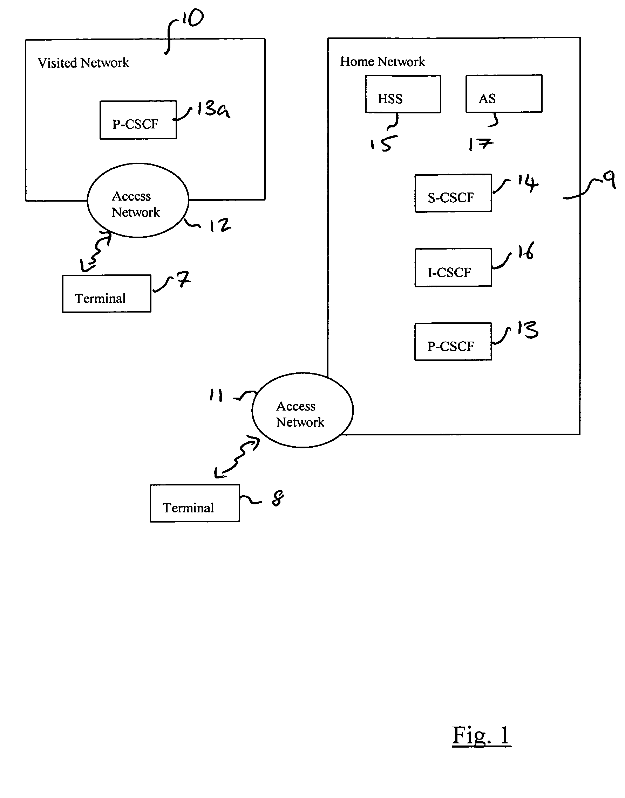

For a better understanding of the invention, embodiments of the invention will now be described, by way of example only, with reference to the accompanying drawings in which:-
Figure 1 shows schematically elements of a telecommunications system in an IMS architecture;

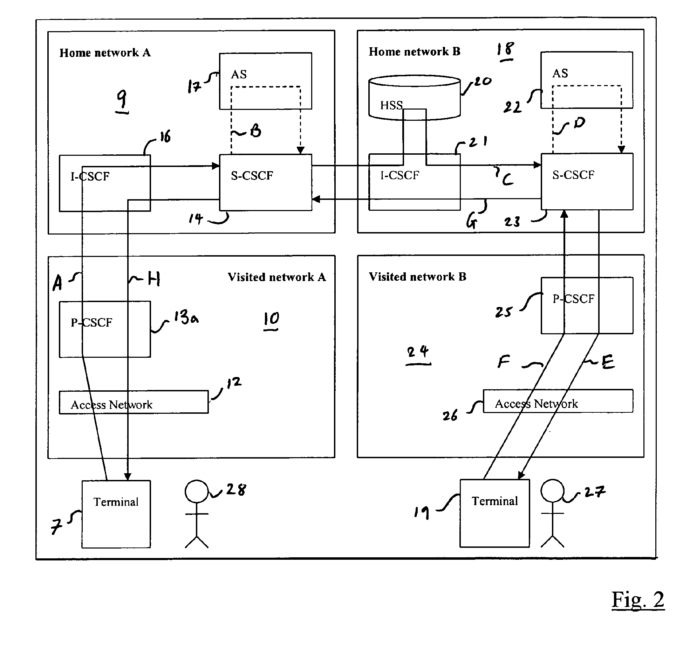

Figure 2 shows schematically elements of a telecommunications system having an IMS architecture and the signalling path for an INVITE request sent from a calling party's terminal to a called party's terminal, and for a response, when the calling party and the called party are roaming;

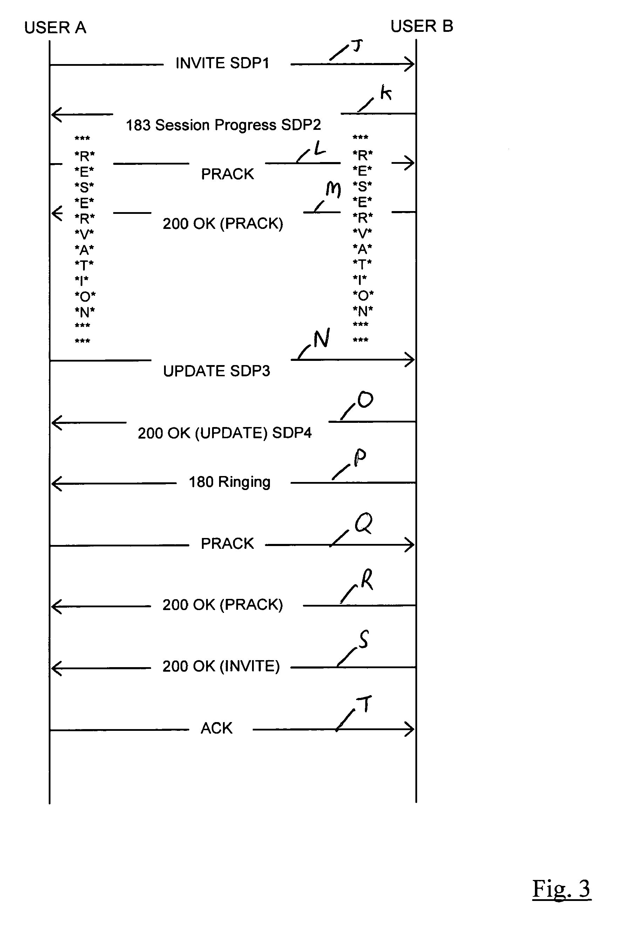

Figure 3 shows illustratively precondition signalling that occurs between the calling party's terminal and the called party's terminal prior to establishment of an IMS session;

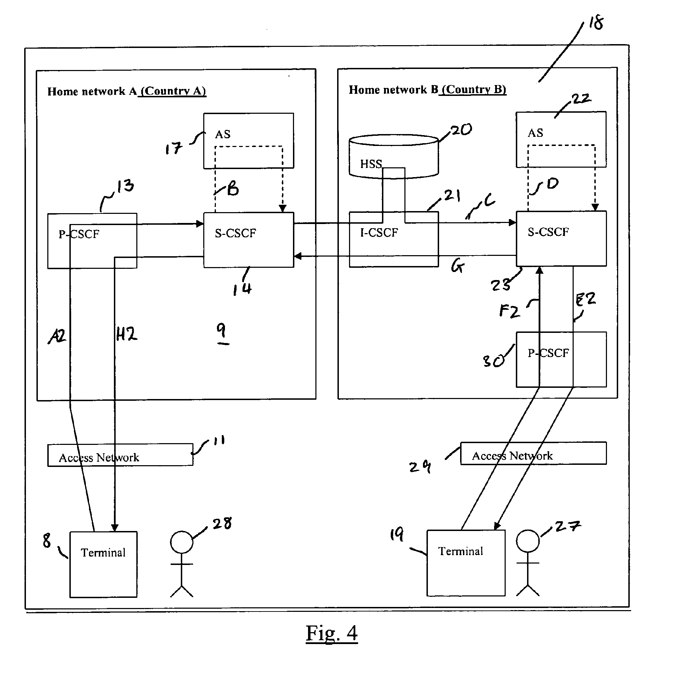

Figure 4 shows schematically elements of a telecommunications system having an IMS architecture and the signalling path for an INVITE request sent from a calling party's terminal to a called party's terminal, and for a response, when the home networks of the calling party and the called party are respectively located in different countries;

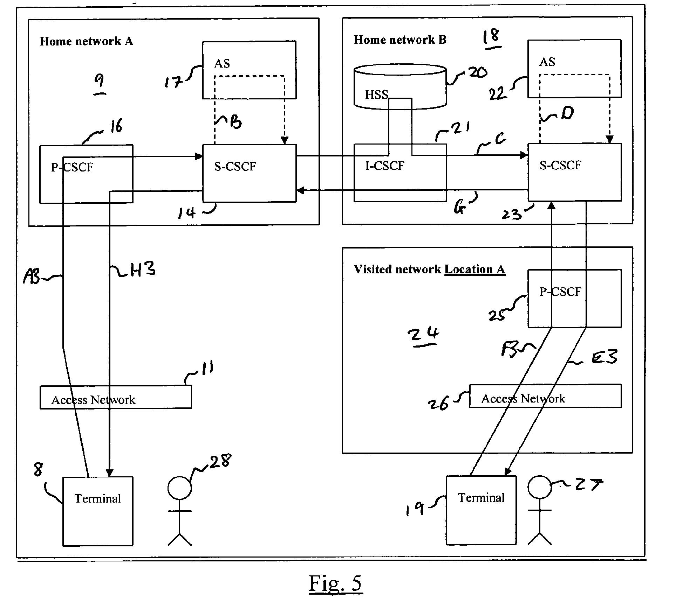

Figure 5 shows schematically elements of a telecommunications system having an IMS architecture and the signalling path for an INVITE request sent from a calling party's terminal to a called party's terminal, and for a response, when the home networks of the calling party and the called party are respectively located in the same country and the called party is roaming; and

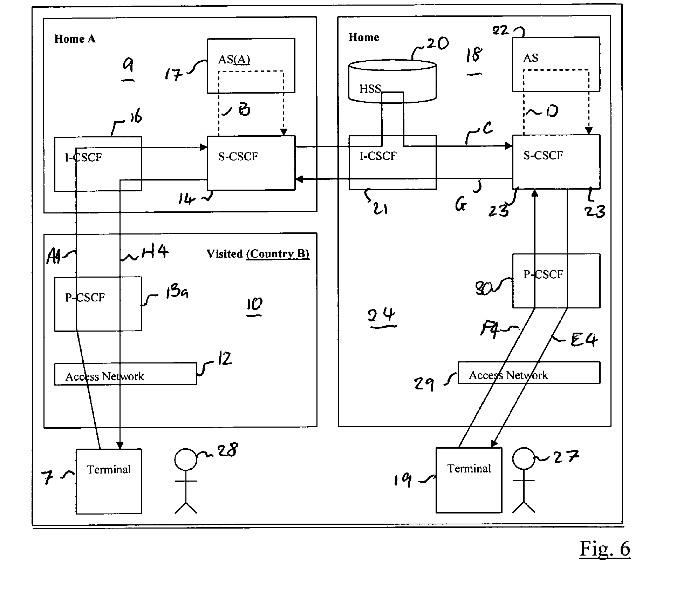

Figure 6 shows schematically elements of a telecommunications system having an IMS architecture and the signalling path for an INVITE request sent from a calling party's terminal to a called party's terminal, and for a response, when the home networks of the calling party and the called party are respectively located in the same country and the calling party is roaming.

Like elements appearing in the drawings are generally designated with the same reference numerals.

An overview of the IMS architecture is now given with reference to Figure 1. Terminals 7, 8 are registered with home network 9. Terminal 7 communicates with the home network 9 via a visited network 10, for example because terminal 7 is roaming. The home network 9 and the visited network 10 have respective access networks 11, 12 for communicating respectively with the terminals 7,8, comprising, for example: a radio access network including, in the case of a UMTS(3G) network, a base station (node B) and radio network controller, or, in the case of a GSM network (or a type of GSM network such as a GPRS network) a base transceiver station and a base station controller, or a W-CDMA or a CDMA2000 implementation; a wireless access network such as a WLAN network or a WiMax network; or a fixed access IP network with a DSL or cable modem link.

Each of terminals 7 ,8 may be a mobile terminal such as a handheld mobile telephone, a personal digital assistant (PDA), or a laptop computer equipped with a data card; and suitable for communicating with the respective access network.

The home network 9 includes a proxy-call session control function (P-CSCF) 13 for routing signalling from and to terminal 8. Also included in the home network 9 is a serving-call session control function (S-CSCF) for providing service to terminals 7,8 and routing signalling received from the P-CSCF 13 onward. The S-CSCF 14 communicates with an application server (AP) 17 for the provision of services. The S-CSCF 14 is allocated to terminal 7. All terminals allocated to the S-CSCF 14 are registered with the same network 9 in the same geographical location, typically country. An interrogating-session control function (I-CSCF) determines to which S-CSCF 14 signalling from the terminals 7,8 should be routed and is capable of interrogates a home subscriber server (HSS) 15.

The HSS 15 performs functions relating to storage and retrieval of subscriber and user profile data. The HSS 15 also has, or has access to, information on the S-CSCF 14 allocated to the terminals 7, 8.

The visited network 10 includes a P-CSCF 13a, which routes signalling between the terminal 7 and the home network 9.

Figure 2 shows elements of the home network 9 and visited network 10 of Figure 1. Figure 2 also shows another home network 18 with which another terminal 19 is registered. The home network 8 includes an HSS 20, an I-CSCF 21, an AS 22 and a S-CSCF 23. The terminal 19 communicates with P-CSCF 25 for routing signalling, received via another access network 26, between the terminal 19 and the home network 18. In this embodiment, the home networks 9, 18 are located in the same geographical location. The geographical location is typically a country but in some cases a multiplicity of countries or a part of a country such as a state - this is the case in all embodiments described.

Terminal 19 communicates with its home network 18 via a visited network 24 because, for example, the called party 9 is roaming. The visited network 24 includes an access network 26 for wireless communication with terminal 19.

Figure 2 also shows illustratively the signalling that takes place when a calling party 28 attempts to establish a session with a called party 27. At **step A**, the calling party's terminal 7 sends to the home network 10 an INVITE targeting the terminal 9 using the public user identity of terminal 9; for example, the public user identity might be: "ueb@visitedb.com". The INVITE is received via the access network 14 at the P-CSCF 13a of visited network 10, where it is routed to the I-CSCF 16 of home network 9, which in turn routes the INVITE to the S-CSCF 14.

The S-CSCF 14 determines that first charging preconditions should be added to the INVITE using filter criteria and sends the INVITE to the AS 17 at **step B**. The AS 17 inserts Session Description Protocol (SDP) lines into the INVITE, which require the calling party's terminal 7 to consent to the charge type that will be incurred if the session is established. An example of the form of the first charging preconditions (SDP1) in the INVITE is:
m=audio 20000 RTP/AVP 0
c=IN IP4 192.0.2.1
a=curr : charging e2e none
a=des: charging mandatory e2e sendrecv

The INVITE is returned to the S-CSCF 14.

At **step C**, the S-CSCF 14 adds a first "Organisation-Location" SIP header to the INVITE to indicate the geographical location of the home network 9; for example, the first header might read: "Organisation-Location : Netherlands". The S-CSCF 14 then sends the INVITE to the home network 18 of terminal 19, where it is routed by the I-CSCF 21 to the S-CSCF 23 via the HSS 20. Optionally, the S-CSCF 14 indicates the identity of the network in the header in place of or in addition to the geographical location.

At **step D**, the S-CSCF 23 determines that a second charging precondition should be added to the INVITE using filter criteria and passes the INVITE to AS 23, which inserts SDP lines (SDP2) into the INVITE, which require the called party's terminal 19 to indicate consent to any charges that will be incurred for the session by the called party 28. An example of the form of SDP2 is:
m=audio 30000 RTP/AVP 0
c=IN IP4 192.0.2.4
a=curr : charging e2e none
a=des : charging mandatory e2e sendrecv
a=conf : charging e2e recv

The INVITE is then returned to the S-CSCF 23.

At **step E**, the S-CSCF 23 applies filter criteria, which can be based on the content of the Organisation-Location header. The S-CSCF 23 then sends the INVITE to visited network 24, where the INVITE is routed by the P-CSCF 25 to the terminal 19 via the access network 26.

At **step F,** the terminal 19 examines the first Organisation-Location header to discover the location and/or identity of the home network 9 of terminal 7. The charge type payable is then determined dependent on the Location-Organisation header and/or the home network 18 of the terminal 19. The identity of the home network 18 of terminal 19 may be known to it, or is obtained by terminal 19 from the home network 18. Unless the terminal 19 is configured to accept automatically the applicable charge type, the terminal 19 sends a "183 Session Progress" response to the terminal 7 before establishing whether the charging conditions are met.

If terminal 19 is configured to reject INVITE requests for sessions that have the first header, the terminal 19 rejects the call by sending a "403 Forbidden" response to the terminal 7 via visited network 24, home network 18, home network 9 and visited network 10.

If terminal 19 is configured to demand permission from the called party 27 to accept such sessions, the called party 27 will be prompted, for example, by a ring tone sounding, for permission. The ring tone might be different to the standard ring tone for incoming calls to alert the user to the need to accept charges. The charge type or actual charge is displayed to the called party 27.

If the called party 28 consents to establishment of the session, the terminal 19 takes no action until it receives confirmation from terminal 7 that the charging preconditions relating to terminal 7 are met.

If the called party declines to consent, establishment of the session is terminated by terminal 19 sending a cancel message to the terminal 7.

If terminal 19 is configured to automatically accept INVITE requests for sessions that have the first header, the terminal 19 sends a "183 Session Progress" response to the terminal 7 including an indication of consent.

At **step G,** the S-CSCF 23 of home network 18 adds a second "Organisation-Location" header to the "183 Session Progress" response which indicates the geographical location of the home network 18 of terminal 19 and/or the identity of the home network 19. For example, the header might read: "Organisation-location: Korea". The "183 Session Progress" response is then routed to S-CSCF 14, via I-CSCF 21.

At **step H**, the S-CSCF 14 forwards the "183 Session Progress" response to terminal 7.

At **step I** (not shown), terminal 7 sends a provisional response acknowledgement (PRACK) request to terminal 19 to acknowledge the "183 Session Progress" response. Terminal 7 then examines the content of the second Organisation-Location header in the "183 Session Progress" response. The charge type payable is dependent on the second header and home network of terminal 7.

If terminal 7 is configured to reject automatically sessions having such a charge type, a CANCEL request is sent to the terminal 19.

If terminal 7 is configured to demand permission from the calling party 28 to accept such sessions, the calling party 28 will be prompted, for example, by a ring tone sounding, for permission. The ring tone may be of different sound to the usual ring tone of the terminal in order to alert the calling party 28 that acceptance of charges needs to be indicated for the session is to be established. If the called party 27 indicates acceptance, or if the terminal 7 is configured to automatically proceed with sessions incurring the charge type applicable to the session to be established, the terminal 7 sends an UPDATE (SDP3) to terminal 19 indicating that the first charging preconditions have been met at terminal 7.

Steps A to E are illustrated at **step J** in Figure 3. The INVITE including SDP1 that arrives at terminal 19 includes the second preconditions that mandate that terminal 19 must approve charging before the session is established.

Steps F to H are illustrated at **step K**. The terminal 19 sends a "183 session progress" message (SDP2) to terminal 19, which, on arrival at terminal 7, includes the second header.

After sending the "183 Session Progress" message, terminal 19 then prompts the called party 27 for consent to establish the session, if such consent is required. When terminal 7 receives the "183 Session Progress" message, it acknowledges receipt of the "183 Session Progress" message by sending a PRACK message to the terminal 19 (**step L**), and prompts the calling party 28 for consent to establish the session, if such consent is necessary. Terminal 19 acknowledges the PRACK message by replying with a 200 OK PRACK message at **step M**.

The second charging preconditions relating to terminal 19 may be met before those relating to terminal 7 are met, but terminal 19 takes no action until it receives confirmation from terminal 7 that the charging preconditions relating to terminal 7 have been met. This confirmation is sent by terminal 7 in the form of an updated offer with updated SDP lines (SDP3) to terminal 19 at **step N**. Consent is indicated in the preconditions information in SDP3. An example of the form of SDP3 is:
m=audio 20000 RTP/AVP 0
c=IN IP4 192.0.2.1
a=curr : charging e2e sendrecv
a=des : charging mandatory e2e sendrecv

If the called party 28 does not consent, establishment of the session is terminated.

On receipt of SDP3, terminal 19 acknowledges with an answer (SDP4) at **step O,** which contains an indication of the current status of the charging permissions. An example of the form of SDP4 is:
m=audio 20000 RTP/AVP 0
c=IN IP4 192.0.2.1
a=curr : charging e2e sendrecv
a=des : charging mandatory e2e sendrecv

Terminal 19 then alerts the called party 27 that a session can be established by ringing, and sends a 180 Ringing message to terminal 7 indicating that terminal 19 is ringing at **step P.** Terminal 7 acknowledges receipt of the 180 Ringing message by sending a PRACK message to terminal 19 at **step Q**. Terminal 19 acknowledges receipt of the PRACK message by replying to terminal 7 with a 200 OK PRACK message at **step R**.

The called party 27 answers the terminal 19 causing the terminal 19 to send a 200 OK (INVITE) message to terminal 7 at **step S,** which is a requires to being the session. Terminal 7 sends an acknowledgement of the 200 OK (INVITE) message at **step T**. The session is now established.

In a second embodiment, the calling party 28 and the called party 27 are in the geographical location of their respective home networks 9, 18. The home networks 9, 18 are located in different geographical locations, typically in different countries. The calling party's terminal 7 and the called party's terminal 19 communicate with respective P-CSCFs 13, 30 in their respective home networks 9, 18 via respective access networks 11, 29.

**Step A2** differs from step A in the first embodiment in that the INVITE is routed by P-CSCF 13 to the S-CSCF 14. **Step E2** and **step F2** differ respectively from steps E and F in the first embodiment in that the P-CSCF 30 in home network 18 routes signally between the terminal 19 and the S-CSCF 23.

In the second embodiment, the called party 27 is not roaming. According to a typical European charging model, no charges will be payable by the called party 27 and so terminal 19 is configured to provide consent automatically.

The charging type payable by the calling party 28 is typically for an international session.

In the third embodiment, the calling party 28 is in the geographical location of the home network 9. The home network 18 of the called party 27 is located in the same geographical region as the home network 9. The called party 27 is roaming, and therefore the terminal 19 communicates with home network 18 via the visited network 24, as in the first embodiment. The calling party's terminal 7 communicates with P-CSCF 13 in the home network 9 via the access network 11.

**Step A3** is the same as step A2. **Step E3** and **step F3** are respectively the same as step E and step F. **Step H3** is the same as step H2.

According to a typical European charging model, the charging type payable by the calling party 28 is for a local call and the charge type payable by the called party 27 is a roaming charge.

In a fourth embodiment, the called party 27 is in the geographical location of the called party's home network 18. That home network 18 is located in the same geographical region as the home network 9 of the calling party 28. The calling party 27 is roaming, and therefore communicates with home network 9 via the visited network 10, as in the first embodiment. The called party's terminal 19 communicates with P-CSCF 25 in the called party's home network 18 via the access network 26.

**Step A4** and **step H4** are the same as step A and step H in the first embodiment. **Step E4** and **step F4** are the same as step E2 and step F2 in the second embodiment.

According to the typical European charging model, the calling party 28 pays charges for roaming and for a local session, and the called party 27 incurs no charges and consent would therefore typically be provided automatically by the terminal 19.

In a modification to the fourth embodiment, a server for providing a service takes the place of terminal 19. The server provides a particular service to terminals in that geographical location. For example, the server may provide a video download service and be configured to send an English language version of a French film to terminals located in the United Kingdom, and an original language version to terminals located in France. The server establishes the location of the terminal 7 in a manner similar to that described above. Step A4 remains the same. Step B4 is omitted. Step C remains the same. Step D and E4 are omitted - instead the INVITE is routed by the S-CSCF 23 to the server. Step F4 is modified so that the server examines the Location-Organisation" header to discover the location of the terminal and/or identity of the network with which the terminal is registered. Steps G to I are omitted. Step J is modified appropriately. Step K is omitted. Step S is modified in that the server sends the 200 OK (INVITE) to the terminal 7, and step T is modified in that the terminal sends an acknowledgement of the 200 OK (INVITE) to the server to establish the session. The server is then able to provide services to the terminal based on the terminal's geographical location. Further signalling steps may of course be included, as are known in the provision of services by a server to a terminal.

The third embodiment can be similarly modified.

It will be appreciated that not all charging models require the first and second preconditions to be satisfied. For example, the embodiments above might be simplified to require the first precondition only to be met - the second precondition need not then be included in the preconditions mechanism. This would result in no requirement for the called party to consent. In the typical European charging model, this might be desirable because a called party generally does not incur a charge unless roaming, which the called party is aware of doing.

In a further modification, a terminal may discover the geographical location and/or identify of the home network of another terminal, but not wish to establish a session. This is done by the terminal 7 sending out an OPTIONS request instead of an INVITE request. The OPTIONS request would proceed in a modified way to the INVITE request: referring to the first embodiment, step A is unchanged; step B is modified so that filter criteria at S-CSCF 14 determine that the OPTIONS request should be sent to the home network 18 of the other terminal 19, and sends it - the AS 17 is bypassed; and step C to H are modified so that the OPTIONS request is received by the S-CSCF 23 and thereafter the second organisation-location header is returned to the terminal 7. The header does not have to be returned by the S-CSCF 23 but by any other element in the home network 18 or by the terminal 19. The terminal 7 receives the header, if the terminal has an address book, may store the discovered information in the address book

In a further modification, the ASs 17, 22 do not add SDP lines to the INVITE - instead, terminal 7 includes SDP lines in the INVITE, and the ASs 17, 22 examine the SDP lines and, if not appropriate for negotiating charging preconditions, alter the SDP lines for that purpose.

## Claims

1. A method of using Session Initiation Protocol to provide data indicative of a location of a first network (18) with which the first terminal (19) is registered to an entity (7), including the steps of: the first terminal (19) sending a message to the first network (18); the first network determining that data indicative of the location of the first terminal (19) is to be provided to the entity; and sending said data to the entity (7).

2. A system for using Session Initiation Protocol to provide data indicative of a location of a first network (18) with which the first terminal (19) is registered to an entity (7), wherein the first terminal (19) is operable to send a message to the first network (18); the first network is operable to determine that data indicative of the location of the first terminal (19) is to be provided to the entity; and including means operable to send said data to the entity (7).

3. A method or a system according to one of claims 1 and 2, wherein said data includes an identifier of the first network (18).

4. A method or a system according to any one of the preceding claims, wherein said data includes an identifier of the location of the first network (18).

5. A method or a system according to any one of the preceding claims, wherein said entity is a second terminal (7) registered with a second network (9).

6. A method of or system for establishing an Internet Protocol Multimedia Subsystem Session including the method or the system according to claim 5, the first terminal (19) and the second terminal (7) having respectively a first user (27) and a second user (28); including the further steps of: the second terminal (7) receiving said data; determining information indicative of charge payable by the second user (28) for the session; determining whether the charge is acceptable to the second user (28); and continuing or discontinuing to establish the session in dependence upon the determination.

7. A method or a system according to claim 6, including a prior step of the second terminal (7) sending to the first terminal (19) via the second network (9) and the first network (18) a prior message, the prior message causing the second network (9) to send to the first terminal (19) data indicative of the location of the second terminal (7); including the yet further steps of: the first terminal (19) receiving said data indicative of the location of the second terminal (7); determining information indicative of charge payable by the first user (27) for the session; determining whether the charge is acceptable to the first user (27); and continuing or discontinuing to establish the session in dependence upon the determination of acceptability to the first user (27).

8. A method or a system according to claim 7, wherein said data indicative of the location of the second terminal (7) includes an identifier of the second network (18).

9. A method or a system according one of claims 7 and 8, wherein said data indicative of the location of the second terminal (7) includes an identifier of the location of the first network (9).

10. A method or a system according to any one of the preceding claims, wherein said first terminal (19) and said second terminal (7) are telecommunications terminals.

11. A method or a system according to any one of claims 1 to 4, wherein said entity is a server for providing services to the first terminal (19).

12. A method of establishing an Internet Protocol Multimedia Subsystem Session between a first terminal (7) and a second terminal (19) having respectively a first user (28) and a second user (27); the method including the first terminal (7) receiving an indication of a charge payable by the first user (28) for the session; determining whether the charge is acceptable to the first user (28); and continuing or discontinuing to establish the session in dependence upon the determination.

13. A system for establishing an Internet Protocol Multimedia Subsystem Session between a first terminal (7) and a second terminal (19) having respectively a first user (28) and a second user (27); wherein the first terminal (7) is operable to receive an indication of a charge payable by the first user (28) for the session; to determine whether the charge is acceptable to the first user (28); and to continue or discontinue to establish the session in dependence upon the determination.
